# EUROPEAN PATENT APPLICATION

(11) **EP 4 310 746 A1**
(43) Date of publication of application: **24.01.2024**
(21) Application number: 22186303.8
(22) Date of filing: 21.07.2022
(51) Int. Cl.: G06Q 10/047, G06Q 50/30

(54) **BUS NETWORK CONTROL SYSTEM**

(71) Applicant: Hitachi, Ltd., Tokyo 100-8280 (JP)
(72) Inventor: WISETJINDAWAT, Wisinee, London EC2Y 5AJ (GB); HARADA, Satoru, London EC2Y 5AJ (GB)
(74) Representative: Mewburn Ellis LLP

(57) **Abstract**

A bus network control system (200) for controlling a plurality of buses (110, 120) operating as at least a part of a bus network (100); wherein the bus network (100) comprises: one or more scheduled buses (110), operating according to respective schedules; one or more unscheduled buses (120); and one or more lines (130), each line being formed from a plurality of sequentially connected stops (131, 132, 133, 134, 135, 136), wherein the schedule of the or each scheduled bus indicates one or more stops corresponding to a section of a respective line; the bus network control system comprising: a demand prediction unit (1101) configured to: obtain demand data pertaining to one or more of the scheduled buses; and predict a number of passengers boarding and/or alighting a given scheduled bus at one or more of the stops on that scheduled bus's schedule based on the demand data; an arrival time prediction unit (1102) configured to: obtain operating data pertaining to one or more buses; and predict respective arrival times of a given scheduled bus at one or more of the stops on that scheduled bus's schedule based on the operating data; and a schedule management unit (1103) that, for a given stop, S, that a given scheduled bus, B, is scheduled to stop at, is configured to: obtain the predicted number of passengers boarding and/or alighting buses at stop S from the demand prediction unit (1101); obtain the predicted arrival time of bus B at stop S from the arrival time prediction unit (1102); predict an average wait time of passengers at stop S to board a bus travelling on the line L of bus B at the time bus B is predicted to arrive at stop S, based on the predicted number of passengers boarding and/or alighting buses at stop S and the predicted arrival time of bus B at stop S; and identify whether there is an unscheduled bus, U, that can arrive at stop S at an earlier time than bus B, and if so, instruct bus U to travel to stop S and assign the unscheduled bus U a schedule of stops.

## Description

### Field of the Invention

The present invention relates to a bus network control system, a computer-implemented method for controlling a plurality of buses, and a non-transitory computer-readable storage medium.

### Background

Buses typically run along bus lines formed from a plurality of sequentially connected stops. In urban areas it is common for a bus network to comprise multiple lines, some of which may have certain stops in common with each other. A bus running along such a line is typically scheduled such that it has a target arrival and departure time from stops making up the line. However, it can often be difficult for scheduled buses to meet the times in their schedule, since buses typically travel along roads that are shared with other vehicles such as cars, vans, cyclists and the like and are therefore exposed to problems such as congestion, roadworks and road closures that may delay such buses. Moreover, when the bus network has a high passenger demand, buses may be delayed due to the time taken for passengers to board and/or alight from a bus at a stop.

Buses being unable to meet their schedules is problematic for bus passengers because the arrival time of the passengers at their destination is then impacted.

Furthermore, during times of peak demand on the bus network, it is possible that a passenger waiting at a bus stop will not be able to board a bus that arrives at that stop because either the bus is already full of passengers or there are too many other passengers also waiting at that stop to board that bus. This then means that the passenger must wait for the following bus to arrive at that stop in the hope that that following bus has space for them to board.

Moreover, where there are a plurality of buses travelling along the same line or a section of road that is common to multiple lines, these delays often result in a bus bunching phenomenon whereby buses that were initially spaced apart on the road end up converging spatiotemporally on the road because a first bus that was initially ahead of a second bus is held up and the second bus catches up to the first bus. This phenomenon is highly undesirable from a resource perspective, because where a bunch of two or more buses arrive at a stop in quick succession, the first bus of the bunch to arrive at the stop often becomes very full with passengers and the last bus of the bunch to arrive at the stop then often has very few passengers, since the passengers that had been waiting at that stop have boarded the preceding buses of the bunch.

Premeditated timetable optimisation is usually unable to remedy such problems because congestion conditions and passenger demand are typically very dynamic.

The present invention has been devised in light of the above considerations.

### Summary of the Invention

It is desired to provide a bus network control system and a bus network control method that are able to control buses within the network such that the bus network can respond to real-time information regarding passenger demand and waiting times in order to operate the bus network to, or as close as possible to, the scheduled bus timings.

In a first aspect there is provided a bus network control system for controlling a plurality of buses operating as at least a part of a bus network. The bus network comprises: one or more scheduled buses, operating according to respective schedules; one or more unscheduled buses; and one or more lines, each line being formed from a plurality of sequentially connected stops, wherein the schedule of the or each scheduled bus indicates one or more stops corresponding to a section of a respective line. The bus network control system comprises a demand prediction unit configured to: obtain demand data pertaining to one or more of the scheduled buses within the bus network; and predict a number of passengers boarding and/or alighting a given scheduled bus at one or more of the stops on that scheduled bus's schedule based on the demand data. The bus network control system further comprises an arrival time prediction unit configured to: obtain operating data pertaining to one or more buses within the bus network; and predict respective arrival times of a given scheduled bus at one or more of the stops on that scheduled bus's schedule based on the operating data. The bus network control system further comprises a schedule management unit that, for a given stop, S, that a given scheduled bus, B, is scheduled to stop at, is configured to: obtain the predicted number of passengers boarding and/or alighting buses at stop S from the demand prediction unit; obtain the predicted arrival time of bus B at stop S from the arrival time prediction unit; predict an average wait time of passengers at stop S to board a bus travelling on the line L of bus B at the time bus B is predicted to arrive at stop S, based on the predicted number of passengers boarding and/or alighting buses at stop S and the predicted arrival time of bus B at stop S; and identify whether there is an unscheduled bus, U, that can arrive at stop S at an earlier time than bus B, and if so, instruct bus U to travel to stop S and assign the unscheduled bus U a schedule of stops. Advantageously, such a control system is able to compensate for a scheduled bus, B, being unable to keep to the scheduled arrival time at stop S by identifying an unscheduled bus, U, within the network that can be sent to stop S ahead of bus B in order to stop the passengers waiting at stop S for bus B waiting for an excessive period of time. Moreover, the unscheduled bus U sent to stop S can help to distribute passenger loads more evenly across the buses running on line L in the case that bus B already has a high passenger load, as the passengers waiting at stop S for bus B can board bus U instead.

A section of a respective line indicated in a schedule may include the totality of sequentially connected stops that make up that line or a sub-set of sequentially connected stops from the totality of sequentially connected stops that make up that line.

The given stop, S, may be selected or suggested for consideration by the bus network control system based on an actual and/or predicted demand.

The instruction of the identified unscheduled bus U to travel to stop S may be an instruction for bus U to travel directly to stop S (i.e. deadheading to stop S) or may be an instruction for bus U to travel to stop S and stop at one or more other stops on route to stop S. In travelling directly to stop S, the bus may utilise the same route as bus B, or may use an alternative route.

The schedule of stops assigned to the unscheduled bus U may at least partially, if not entirely, correspond to the schedule of remaining stops on bus B's schedule after stop S. The schedule of stops assigned to the unscheduled bus may include only stop S and a terminus of the line. Once the unscheduled bus has finished its assigned schedule, it can be returned to the pool of available unscheduled buses and/or head back to a depo of the bus.

In identifying whether there is an unscheduled bus, U, that can arrive at stop S at an earlier time than bus B, the schedule management unit may base its identification on one or more of: the location of bus U relative to stop S; the distance and traffic conditions of a route to stop S for bus U; the availability of a driver for bus U; and the drivable range of bus U.

By basing the schedule management unit's identification on one or more of these factors relating to bus U, the control system is able to more reliably identify unscheduled buses that will actually be able to arrive at stop S ahead of bus B once the instruction has been issued to bus U.

The plurality of buses may include one or more internal combustion engine driven buses, hybrid engine driven buses, or electrically driven buses. In determining the drivable range, the schedule management unit may review a remaining fuel level and/or remaining charge level.

The schedule management unit may be further configured to determine whether the predicted average wait time of passengers at stop S exceeds a threshold wait time, and may be further configured such that if the schedule management unit identifies an unscheduled bus, U, that can arrive at stop S at an earlier time than bus B, the schedule management unit does not to instruct bus U to travel to stop S and does not to assign bus U a schedule of stops if the predicted average wait time of passengers at stop S does not exceed the threshold wait time.

Advantageously, this facilitates the efficient use of the unscheduled bus(es) within the bus network in the case that the number of unscheduled buses within the bus network is relatively small in comparison to the number of scheduled buses and therefore the number of possible stops within the network at which passengers will be waiting a long time for those scheduled buses.

Where the schedule management unit is configured to determine if the average wait time of passengers at stop S exceeds a threshold wait time in order to inform the decision as to whether or not to instruct bus U to travel to stop S, the schedule management unit may also determine the reduced predicted average wait time of passengers at stop S at the predicted arrival time of bus U at stop S if bus U is instructed to travel to stop S; and does not instruct bus U to travel to stop S and does not to assign bus U a schedule of stops if the reduced predicted average wait time is greater than the threshold wait time.

Advantageously, this makes the use of unscheduled buses by the control system even more efficient as an unscheduled bus is only used where the average wait time of passengers at stop S for bus B is greater than the threshold wait time and the bus U will be able to reduce the average wait time below that threshold wait time.

The bus network control system may be for a bus network comprising plural scheduled buses. In such a case, the demand prediction unit may be further configured to: obtain demand data pertaining to a plurality of scheduled buses; and predict a number of passengers boarding and/or alighting a plurality of scheduled buses at a plurality of the stops on said plurality of scheduled buses' respective schedules based on the demand data; the arrival time prediction unit may be further configured to: obtain operating data pertaining to a plurality of scheduled buses; and predict respective arrival times of a plurality of scheduled buses at a plurality of the stops on said plurality of scheduled buses' respective schedules based on the operating data; and the schedule management unit may be further configured to: obtain the predicted number of passengers boarding and/or alighting buses at stop S from the demand prediction unit; obtain the predicted arrival time of bus B at stop S from the arrival time prediction unit; predict an average wait time of passengers at stop S to board a bus travelling on the line L of bus B at the time bus B is predicted to arrive at stop S, based on the predicted number of passengers boarding and/or alighting buses at stop S and the predicted arrival time of bus B at stop S; and identify whether there is an unscheduled bus, U, that can arrive at stop S at an earlier time than bus B, and if so, instruct bus U to travel to stop S and assign the unscheduled bus U a schedule of stops; for each stop, S, of a plurality of stops that each bus, B, of a plurality of scheduled buses is scheduled to stop at.

The schedule management unit may be further configured to: identify a preceding bus B₋₁ travelling along line L and scheduled to arrive at stop S at an earlier time than bus B; and determine whether holding bus B₋₁ at stop S for a period of time exceeding a stop time on the schedule of bus B₋₁ would reduce an aggregate wait time that is the sum of the predicted average wait time of passengers at a one or more stops on bus B's schedule, and if so: determine the duration for which bus B₋₁ should be held at stop S, instruct bus B₋₁ to hold at stop S for the determined duration, and update the predicted average wait time of passengers at stop S; prior to determining whether there is an unscheduled bus U that can arrive at stop S at an earlier time than bus B.

The control system being able to conduct a bus holding operation is advantageous in that it provides the control system with a manner in which to control the spacing of buses along a line. This is particularly the case where an unscheduled bus, U, has been instructed to travel to a stop S on the line L and so re-spacing of the other bus(es) on that line is desirable in order to reduce the aggregate wait time.

The preceding bus B₋₁ may be a bus ahead of bus B on the line L and adjacent bus B in an ordering of the buses on the line L, or there may be one or more additional preceding buses between bus B and bus B₋₁ in an ordering of the buses on the line L i.e. preceding does not imply immediately preceding.

Where the control system comprises the schedule management unit configured to conduct the above-described bus holding operation, the schedule management unit may be configured to determine the duration for which the preceding bus B₋₁ should be held at stop S based on one or more of: the departure time of a bus preceding bus B₋₁; the predicted arrival times of buses B₋₁ and B at stop S; the predicted number of passengers boarding and alighting buses B₋₁ and B at stop S; and a predicted number of passengers in buses B₋₁ and B at stop S.

By basing the schedule management unit's determination of the duration for which the preceding bus B₋₁ should be held at stop S on one or more of these factors, the control system is able to more reliably re-space buses along the line L such as to reduce the aggregate wait time.

Where the control system comprises the schedule management unit configured to conduct the above-described bus holding operation, the schedule management may be further configured not to instruct bus B₋₁ to hold at stop S for the determined duration if the aggregate wait time is less than a threshold aggregate wait time.

This is advantageous where it is desired not to delay passengers onboard bus B₋₁ and the aggregate wait time is not in excess of a threshold aggregate wait time that is deemed an acceptable aggregate wait time.

Additionally, the schedule management unit may be further configured to identify a preceding stop S₋₁ that bus B is scheduled to stop at ahead of stopping at stop S; and determine whether skipping stop S₋₁ would reduce an aggregate wait time that is the sum of the predicted average wait time of passengers at a plurality of stops on bus B's schedule, and if so: instruct bus B to skip stop S₋₁, and update the predicted average wait time of passengers at stop S; prior to determining whether there is an unscheduled bus U that can arrive at stop S at an earlier time than bus B.

Advantageously, the control system being able to conduct the above-described stop skipping operation provides the control system with a manner in which to control the spacing of buses along a line. This is particularly advantageous in the case that the number of unscheduled buses within the bus network is relatively small in comparison to the number of scheduled buses and therefore the number of possible stops within the network at which passengers will be waiting a long time for those scheduled buses, as the stop skipping operation can obviate the need to instruct an unscheduled bus, U, to travel to stop S.

The schedule management unit, when configured to conduct the above-described stop skipping operation, may be further configured to determine whether bus B skipping stop S₋₁ on line L would reduce the aggregate wait time of passengers based on one or more of: the predicted travel time of buses on line L between stops on bus B's schedule; the predicted arrival times of buses on line L at stops on bus B's schedule; the predicted number of passengers boarding and alighting buses on line L at stops on bus B's schedule; and predicted numbers of passengers in buses on line L.

By basing the schedule management unit's determination of the whether bus B should skip stop S₋₁ on one or more of these predictions, the control system is able to more reliably control the buses in the bus network such as to reduce the aggregate wait time.

Where the control system comprises the schedule management unit configured to conduct the above-described stop skipping operation, the schedule management unit may be further configured not to instruct bus B to skip stop S₋₁ if the aggregate wait time is less than a threshold aggregate wait time.

This is advantageous where it is desired not to delay passengers waiting for bus B at stop S₋₁ and the aggregate wait time is not in excess of a threshold aggregate wait time that is deemed an acceptable aggregate wait time.

The demand data obtained and used by the demand prediction unit may include one or more of: data from sensors on the buses and/or at the stops; cameras on the buses and/or at the stops; historical passenger demand data; weather forecast data; and the time and/or date for which the number of passengers boarding and/or alighting is to be predicted.

Obtaining and using such demand data for predicting a number of passengers boarding and/or alighting a given scheduled bus at one or more of the stops is advantageous in making that prediction more accurate and reliable.

The control system may comprise a database and some, or all, of the demand data may be stored in that database, with the demand prediction unit being configured to obtain any demand data stored in the database from the database.

The operating data obtained and used by the arrival time prediction unit may include one or more of: geocoordinates and timestamps of the buses; geocoordinates of the bus lines and stops; historical passenger demand data; weather forecast data; the time and/or date for which the respective arrival times are to be predicted; bus schedules; and traffic data.

Obtaining and using such operating data for predicting respective arrival times of a given scheduled bus at one or more of the stops is advantageous in making that prediction more accurate and reliable.

Where the operating data includes geocoordinates and timestamps of the buses, the geocoordinates and timestamps of the buses may be obtained from passengers' mobile devices.

This is advantageous in providing a source for such data. For example, if there is no GPS sensor on a bus or the GPS sensor on the bus is not providing data, then the passengers' mobile devices can be used to provide equivalent data to that which would be received from a bus GPS sensor. Accordingly, the reliability of the control system is improved.

The control system may comprise a database and some, or all, of the operating data may be stored in that database, with the arrival time prediction unit being configured to obtain any operating data stored in the database from the database.

Where the control system comprises a database for storing demand data and a database for storing operating data, these databases may be the same database, or they may be distinct databases stored either on the same or distinct computers.

The control system may further comprise a feedback and update unit configured to: receive an instruction issued by the schedule management unit to a bus; update that bus's schedule and a crowdedness index of that bus based on that instruction; and output the updated schedule and crowdedness index to a display. Advantageously, the control system comprising such a feedback and update unit can provide passengers using the bus network with up-to-date information on the operation of the bus network.

The control system may be configured to use a machine learning technique for one or more of: predicting the number of passengers boarding and/or alighting a given scheduled bus at one or more of the stops on that scheduled bus's schedule; predicting respective arrival times of a given scheduled bus at one or more of the stops on that scheduled bus's schedule; predicting the average wait time of passengers at stop S to board a bus travelling on the line L of bus B at the time bus B is predicted to arrive at stop S; and identifying whether there is an unscheduled bus, U, that can arrive at stop S at an earlier time than bus B. The machine learning technique may be, for example, a neural network, random forest model, regression model, or other suitable machine learning technique. The machine learning technique may include a convolutional neural network (CNN), a long short-term memory model, or a residual network (ResNet). The inputs to the machine learning technique may be any one or more of: a timeseries of historical bus occupancy; a distance between bus stops; GPS travel logs from one or more buses; a time of day; a day of week; and/or weather conditions.

Using machine learning for one or more of the above predictions and identifications is advantageous in that the prediction(s) and/or identification(s) can be made more accurate and efficient when large volumes of data are being considered, as the machine learning algorithms are able to easily identify trends and patterns in that data and continually improve in accuracy and efficiency as more data is processed by the algorithms over time.

In a second aspect there is provided A computer-implemented method for controlling a plurality of buses operating as at least part of a bus network; wherein the bus network comprises: one or more scheduled buses operating according to respective schedules; one or more unscheduled buses; and one or more lines, each line being formed from a plurality of sequentially connected stops, wherein the schedule of the or each scheduled bus indicates one or more stops corresponding to a section of a respective line; the method comprising the steps of: a demand prediction unit obtaining demand data pertaining to one or more of the scheduled buses within the bus network; the demand prediction unit predicting a number of passengers boarding and/or alighting a given scheduled bus at one or more of the stops on that scheduled bus's scheduled based on the demand data; an arrival time prediction unit obtaining operating data pertaining to one or more buses within the bus network; the arrival time prediction unit predicting the respective arrival times of a given scheduled bus at one or more of the stops on that scheduled bus's schedule based on the operating data; and for a given stop, S, that a given scheduled bus, B, is scheduled to stop at: a schedule management unit obtaining the predicted number of passengers boarding and/or alighting buses at stop S; the schedule management unit obtaining the predicted arrival time of bus B at stop S; the schedule management unit predicting an average wait time of passengers at stop S to board a bus travelling on the line L of bus B at the time bus B is predicted to arrive at stop S, based on the predicted number of passengers boarding and/or alighting buses at stop S and the predicted arrival time of bus B at stop S; and the schedule management unit identifying whether there is an unscheduled bus, U, that can arrive at stop S at an earlier time than bus B, and if so, instructing bus U to travel to stop S and assigning bus U a schedule of stops.

The computer-implemented method may include any one, or any combination insofar as they are compatible, of the optional features set out with reference to the first aspect.

In a third aspect there is provided a non-transitory computer-readable storage medium containing machine executable instructions which, when executed on a processor, cause the processor to perform the computer implemented method of the second aspect.

The computer-implemented method may include any one, or any combination insofar as they are compatible, of the optional features set out with reference to the first aspect.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
Figure 1 illustrates the problems associated with buses missing their scheduled stop times due to traffic conditions and the bunching phenomenon that can arise due to buses being held up in congestion;
Figure 2 illustrates a bus network comprising a line formed from a plurality of sequentially connected stops, and a plurality of scheduled and unscheduled buses;
Figure 3 illustrates a bus network comprising two lines, each line formed from a plurality of sequentially connected stops, and a plurality of scheduled and unscheduled buses;
Figure 4 is a flowchart illustrating a sequence of operations for execution by a bus network control system to control a plurality of buses;
Figures 5A - 5C are tables of demand data for use by a bus network control system to determine how buses within the bus network should be controlled; Figure 5A is a table of historical passenger demand data, Figure 5B is a table of real-time passenger demand data, and Figure 5C is a table of weather forecast data;
Figures 6A - 6C are tables of operating data for use by a bus network control system to determine how buses within the bus network should be controlled; Figure 6A is a table of geocoordinates and timestamps for a user on a bus, Figure 6B is a table of historical travel data, Figure 6C is a table of traffic data;
Figures 7A - 7C are tables of data output from an arrival time prediction unit, a demand prediction and a schedule management unit; Figure 7A is a table of the predicted arrival times of a bus at stops on its schedule and the predicted number of passengers waiting to board that bus at each of those stops, Figure 7B is a table of the predicted possible arrival times of different unscheduled buses within the bus network at a stop within the bus network, Figure 7C is a table of the predicted arrival times of busses at a given stop within the bus network;
Figure 8 is a flowchart illustrating a sequence of sub-operations that may form part of an unscheduled bus identification step in Figure 4;
Figure 9 is a modification of the flowchart in Figure 4, providing a sequence of operations for execution by a bus network control system;
Figure 10 is a modification of the flowchart in Figure 4, providing a sequence of operations for execution by a bus network control system;
Figure 11 is a flowchart illustrating a sequence of sub-operations that may form part of a holding operation analysis step in Figure 10;
Figure 12 is a flowchart illustrating a sequence of sub-operations that may form part of a stop skipping operation analysis step in Figure 10;
Figure 13 illustrates the structure of the bus network control system and associated units for executing the sequence of operations in Figure 10;

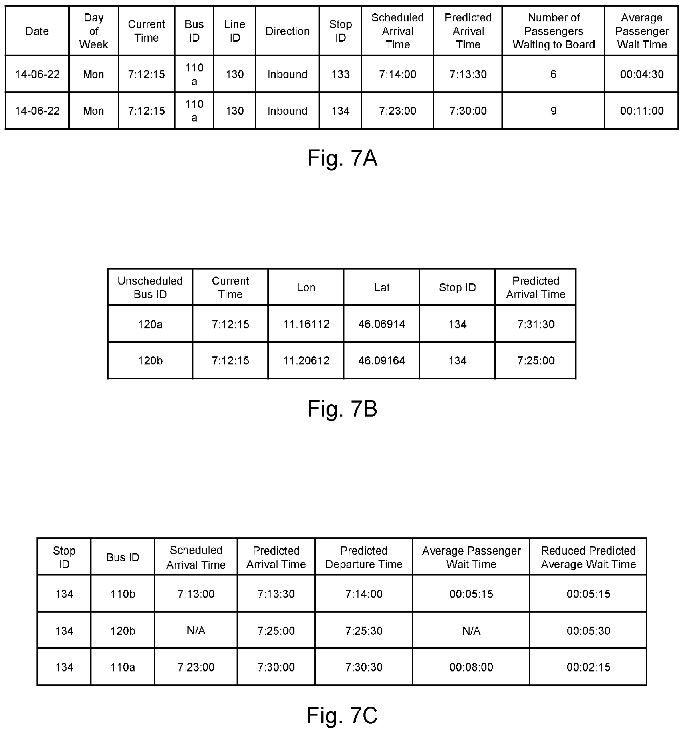

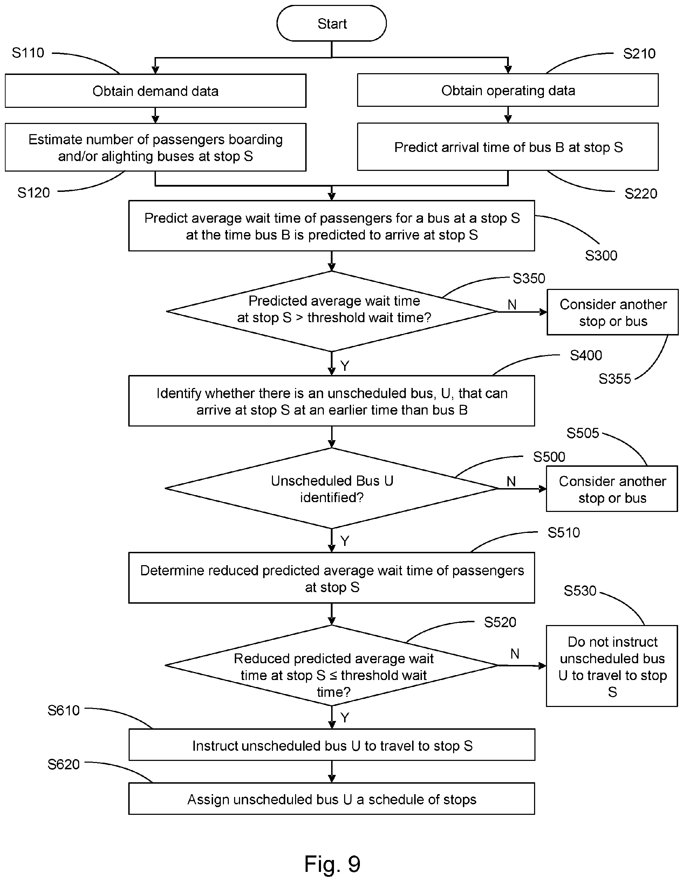

Figure 9 is a flowchart illustrating a sequence of sub-operations that may form part of an operation in Figure 7;

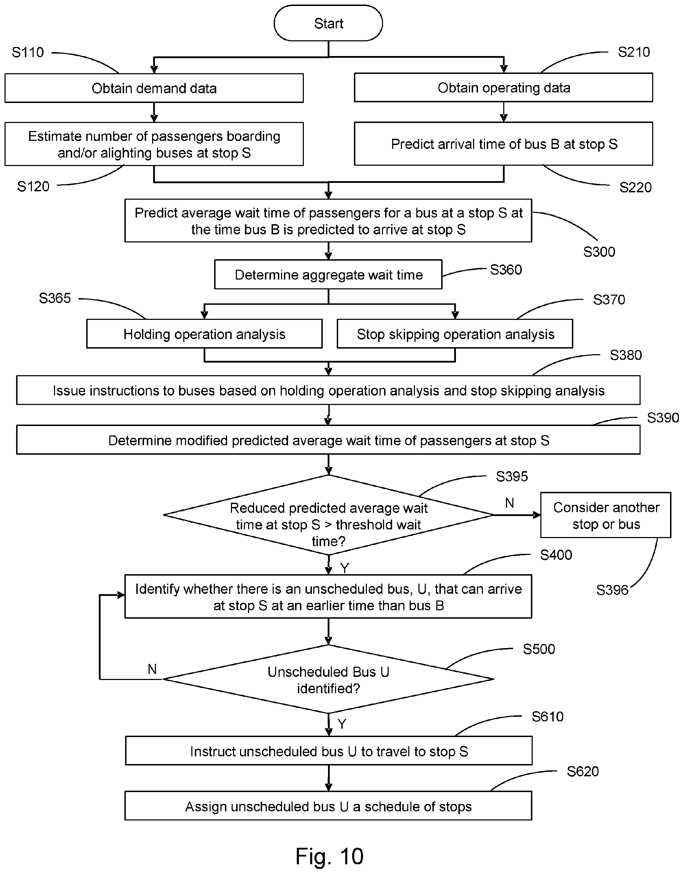

Figure 10 is a flowchart illustrating a sequence of sub-operations that may form part of an operation in Figure 7;

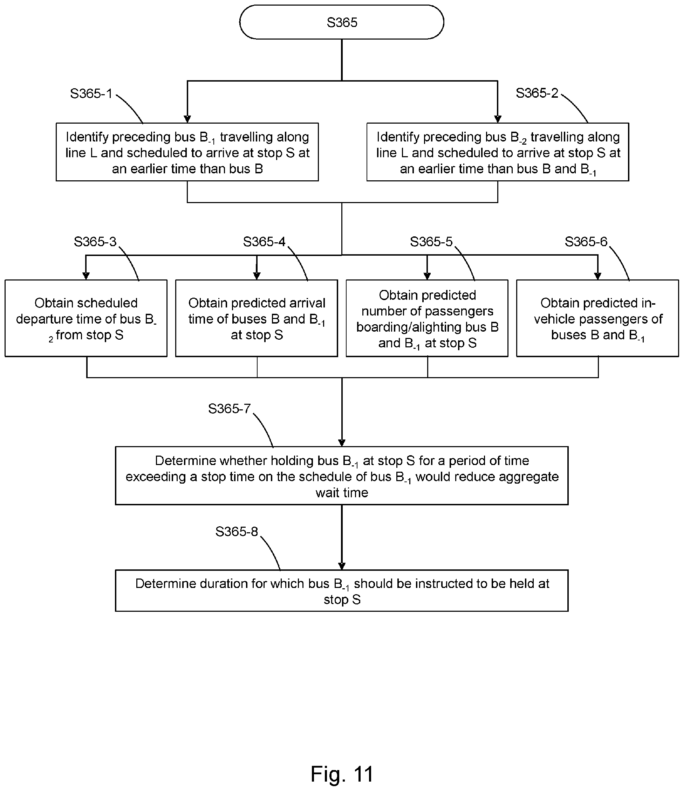

Figure 11 illustrates a user device display providing real-time arrival time and crowdedness data for the bus network;

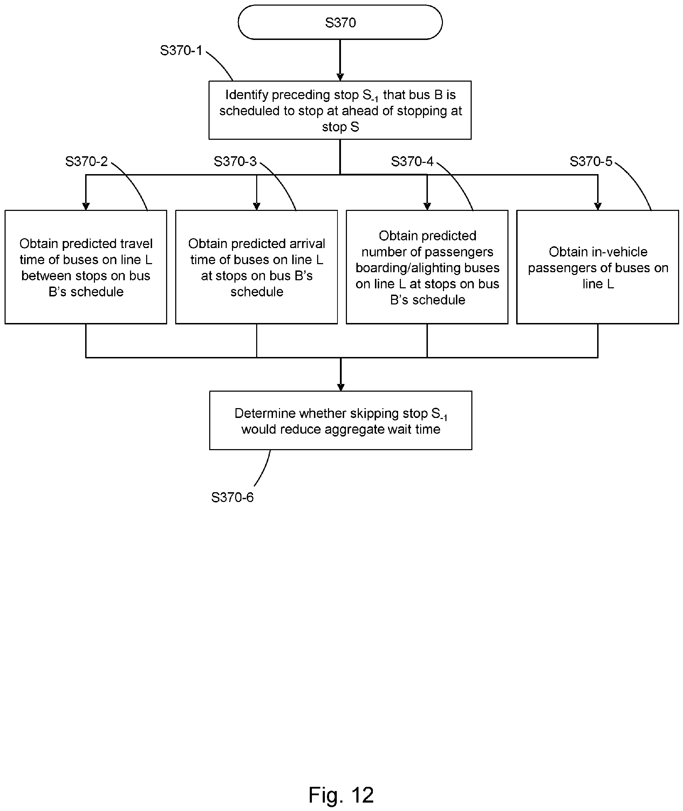

Figure 12 illustrates a bus with a display providing real-time arrival time and crowdedness data for the bus network;

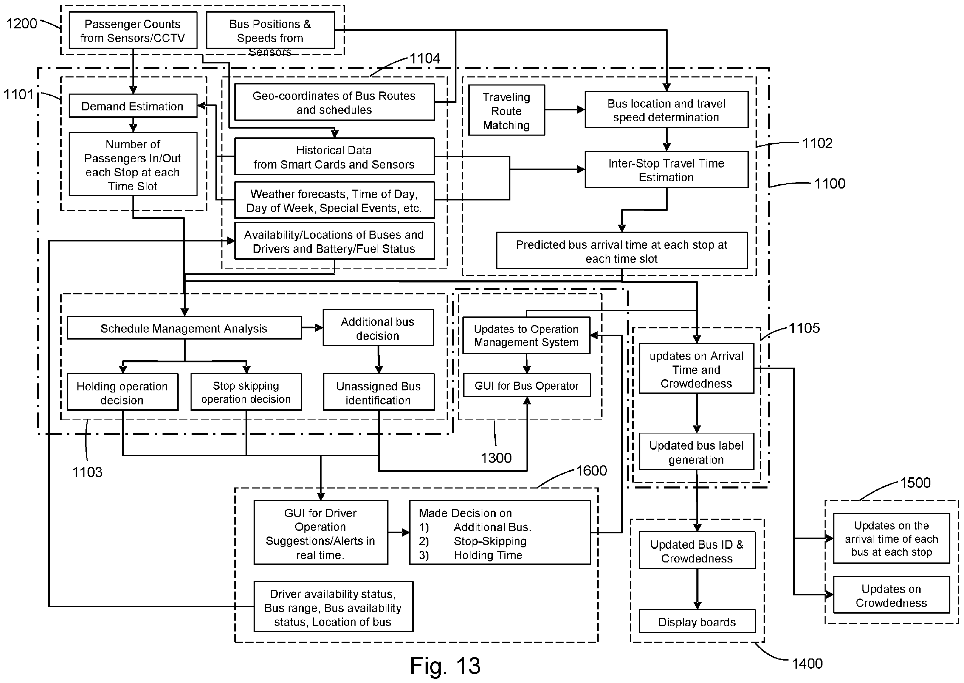

Figure 13 illustrates a bus stop display providing real-time arrival time and crowdedness data for the bus network;

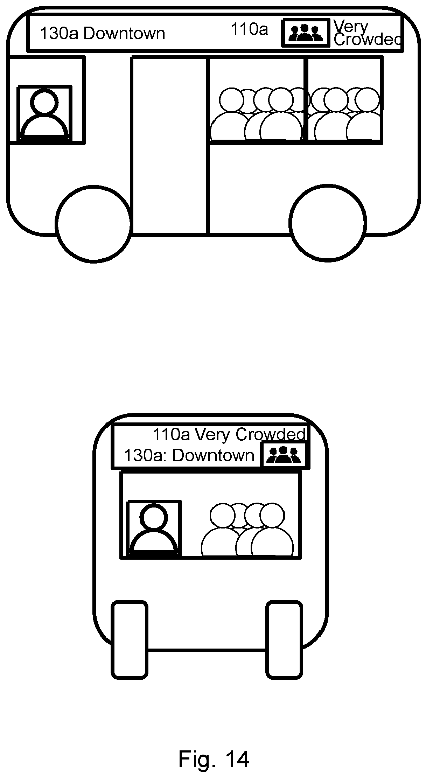

Figure 14 illustrates a bus label displayed on display boards on the outside of a bus;

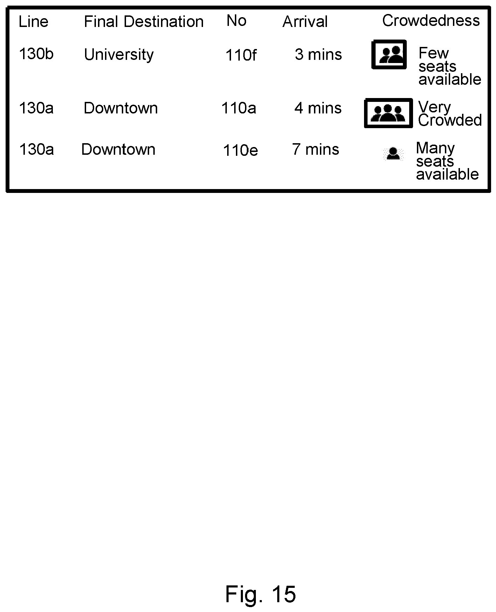

Figure 15 illustrates bus labels displayed on a display board of a bus stop;

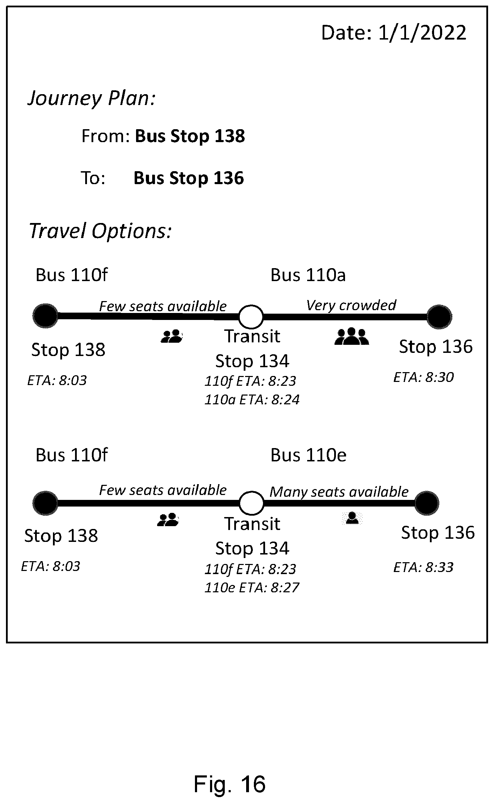

Figure 16 illustrates a graphical user interface for display on a passenger device; and

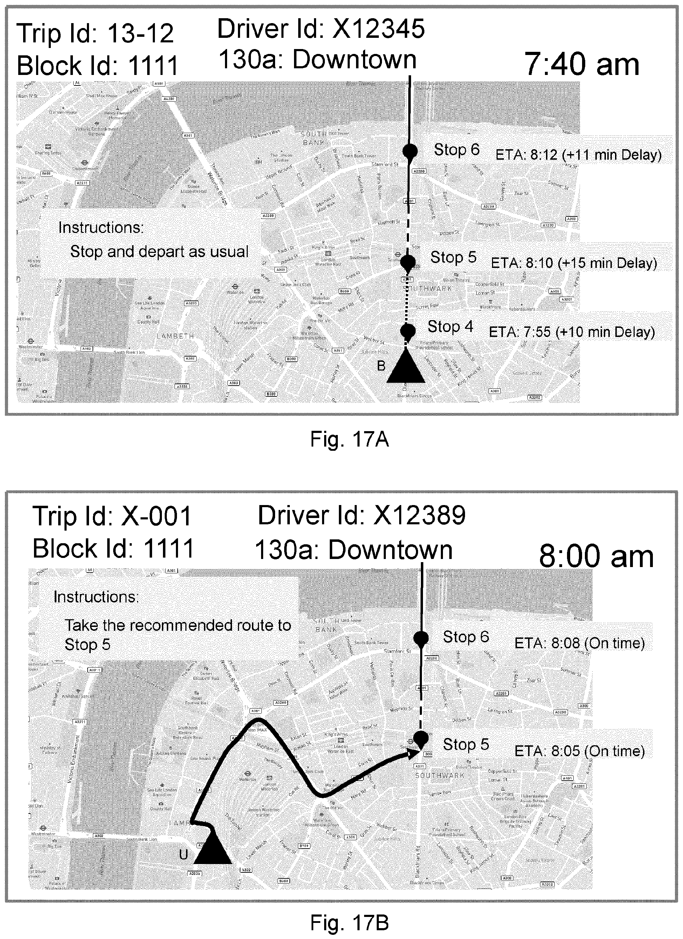

Figures 17A and 17B illustrate graphical user interfaces for display on bus driver devices of a scheduled bus and an unscheduled bus, respectively.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

### Figure 1

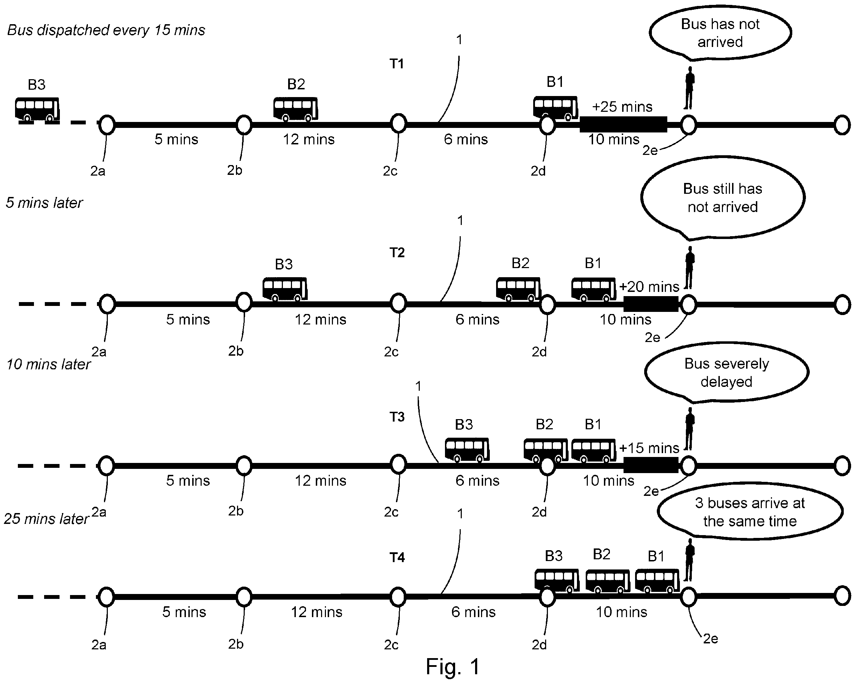

Figure 1 illustrates a bus network comprising a line 1 formed from a plurality of sequentially connected stops 2a, 2b, 2c, 2d, 2e at four different, and sequential, points in time T1, T2, T3, T4. A plurality of scheduled buses B1, B2, B3 are travelling, or are scheduled to travel, along the line 1. Figure 1 illustrates the bus bunching phenomenon that the present invention seeks to militate against. At T1, buses B1 and B2 are travelling along the line 1 and bus B3 is waiting to depart a bus depot. Buses are dispatched onto the line 1 at regular intervals, for example every 15 minutes. Each bus B1, B2, B3 dispatched onto line 1 is a scheduled bus with a schedule of stops corresponding to a section of the line 1, with a schedule containing times for travelling between, and arriving at, those stops. The scheduled time to travel between two given stops on the line 1 is provided below the section of the line 1 connecting those stops in Figure 1 (e.g. 12 minutes to travel between stops 2b and 2c). At time T1, bus B1 has departed stop 2d and is on route to stop 2e. However, congestion on the route between stops 2d and 2e has increased the predicted travel time between stops 2d and 2e and bus B1 is 25 minutes from stop 2e, meaning that bus B1 has missed its scheduled arrival time at stop 2e and the passenger at stop 2e has been left waiting for bus B1.

At time T2, bus B1 has progressed through the congestion and is now 20 minutes from stop 2e. However, in the meantime, bus B2 has travelled along the line 1 in accordance with its schedule due to the absence of any congestion between stops 2b and 2d, and is arriving at stop 2d on schedule. The gap between buses B1 and B2 on the road and in terms of time has reduced due to bus B1 being delayed in congestion whilst bus B2 has been travelling unimpeded in accordance with its time schedule. Bus B3 has also now been dispatched from the depot and begun travelling along the line 1. Bus B3 is on route between stops 2b and 2c and is travelling in accordance with its schedule. The passenger at stop 2e is still waiting for a bus to arrive.

At time T3, bus B1 has made further progress through the congestion and is now 15 minutes from stop 2e. However, in the meantime, bus B2 has arrived at stop 2d, left stop 2d and joined the congestion behind bus B1, meaning that buses B1 and B2 are now very close together spatiotemporally i.e. bus bunching is occurring. Bus B3 has continued to progress along the line 1 to its schedule and is travelling between stops 2c and 2d. The gap between buses B1 and B2 and bus B3 on the road and in terms of time has reduced due to buses B1 and B2 being delayed in congestion whilst bus B3 has been travelling in accordance with its time schedule. The passenger at stop 2e is still waiting for a bus to arrive.

At time T4, the gap between buses B1 and B2 and bus B3 has reduced further and all three buses are now very close together spatiotemporally i.e. further bus bunching is occurring. The congestion between stops 2d and 2e has dissipated and buses B1, B2 and B3 will arrive at stop 2e in quick succession of each other.

This bus bunching phenomenon is highly undesirable from a resource perspective, because when buses B1, B2 and B3 arrive at a stop in quick succession, bus B1, which will arrive at stop 2e first, will likely become very full with passengers who have been waiting at stop 2e for a long time for a bus to arrive and bus B3, which will be the last bus of the three buses to arrive at stop 2e will likely have very few passengers boarding, since the passengers that had been waiting at stop 2e will have boarded buses B1 and B2 already.

### Figure 2

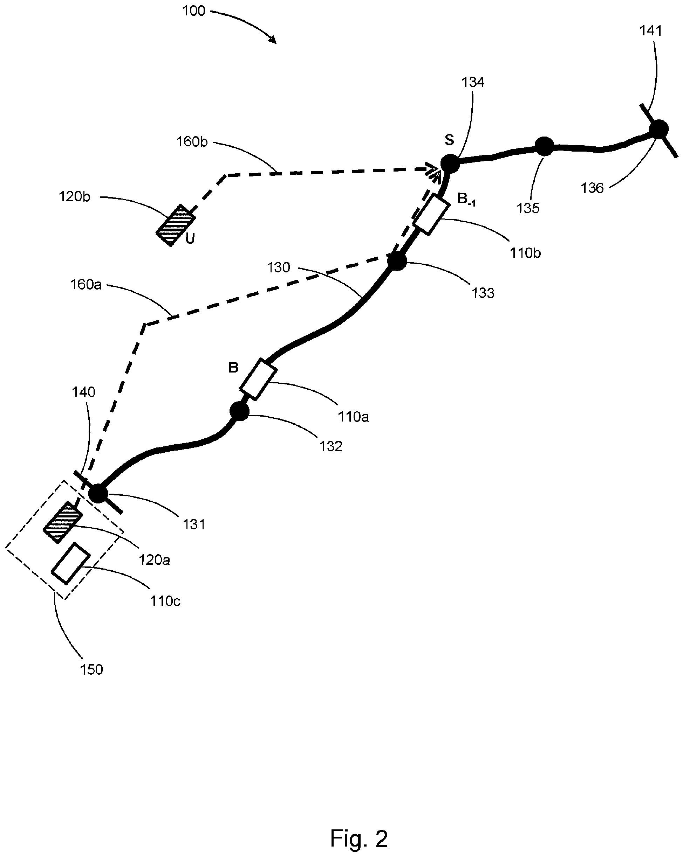

Figure 2 illustrates a bus network 100 comprising: a line 130 formed from a plurality of sequentially connected stops 131, 132, 133, 134, 135, 136; a plurality of scheduled buses 110a, 110b, 110c; and a plurality of unscheduled buses 120a, 120b. The line 130 has its origin 140 at stop 131, and its terminus 141 at stop 136. A bus depot 150 is located proximate to the line origin 140. The scheduled buses 110a - 110c in Figure 2 are each provided with a schedule indicating one or more stops corresponding to a section of the line 130. For example, at this point in time, scheduled bus 110b has stops 134, 135 and 136 remaining on its schedule and scheduled bus 110c is due to leave the depot 150 imminently and has stops 131-136 on its schedule. The section of the line 130 indicated in a bus's schedule may include the totality of sequentially connected stops that make up that line or a sub-set of sequentially connected stops from the totality of sequentially connected stops that make up that line. The bus network of Figure 2 further includes two unassigned buses 120a, 120b, with unassigned bus 120a located in the depot 150 and unassigned bus 120b located outside the depot 150 and off the line 130.

### Figure 3

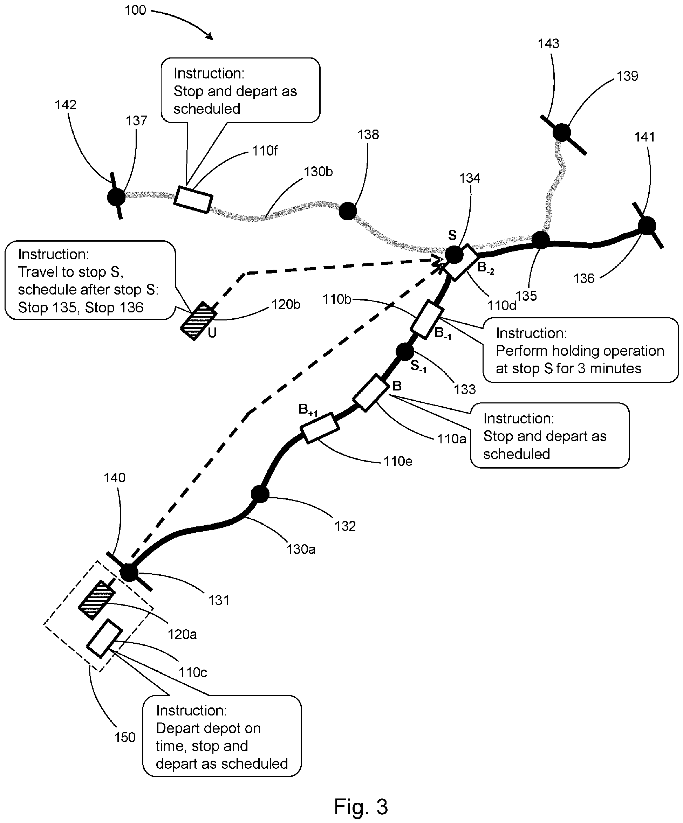

Figure 3 illustrates a second bus network that is a modification of the bus network of Figure 2. The bus network comprises: a first line 130a formed from sequentially connected stops 131, 132, 133, 134, 135 and 136, extending from a first line origin 140 at stop 131 to a first line terminus 141 at stop 136; and a second line 130b formed from sequentially connected stops 137, 138, 134, 135 and 139, extending from a second line origin 142 at stop 137 to a second line terminus 143 at stop 139. Stops 134 and 135 are common to the first line 130a and the second line 130b. A scheduled bus 110f is travelling along line 130b. Bus 110a is identified as bus B in Figure 3 and accordingly buses 110b and 110d are preceding buses B₋₁ and B₋₂, respectively, to bus B because they precede bus B on the first line 130a. Bus 110e is a following bus, B₊₁, to bus B because it is following bus B on the first line 130a. A scheduled bus 110f is travelling along the second line 130b. Figure 3 also includes indications of the operating instructions issued to buses within the network. Buses within the network may be provided with a bus driver device that can display an image similar to Figure 3 as part of a graphical user interface (GUI) for a bus operator on an operation and decision-making unit (for example an operator in a central control room, who is monitoring the transit system). Such a GUI of a typically refreshes periodically, for example every 30 seconds. to provide the operator with up-to-date information.

### Figure 4

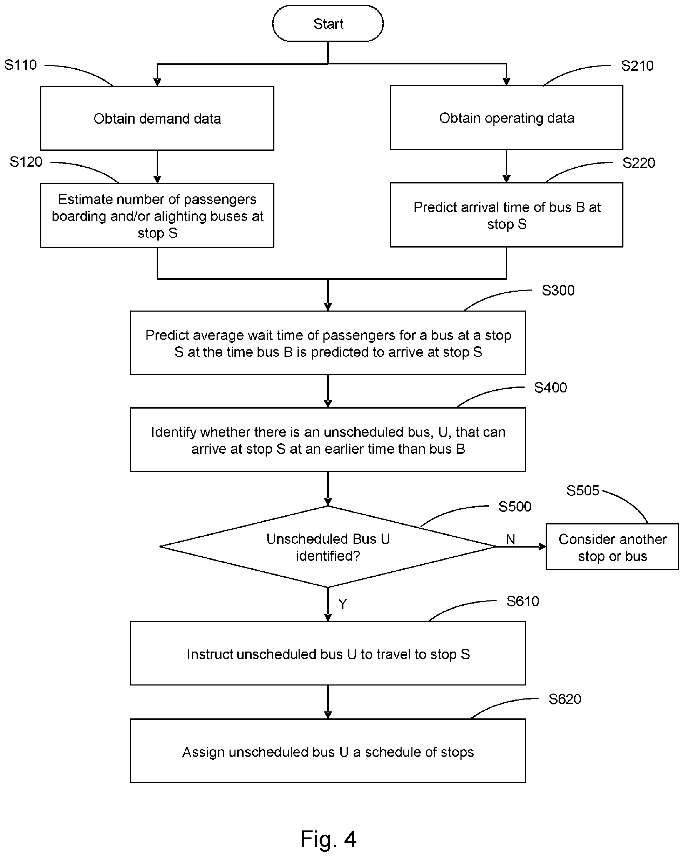

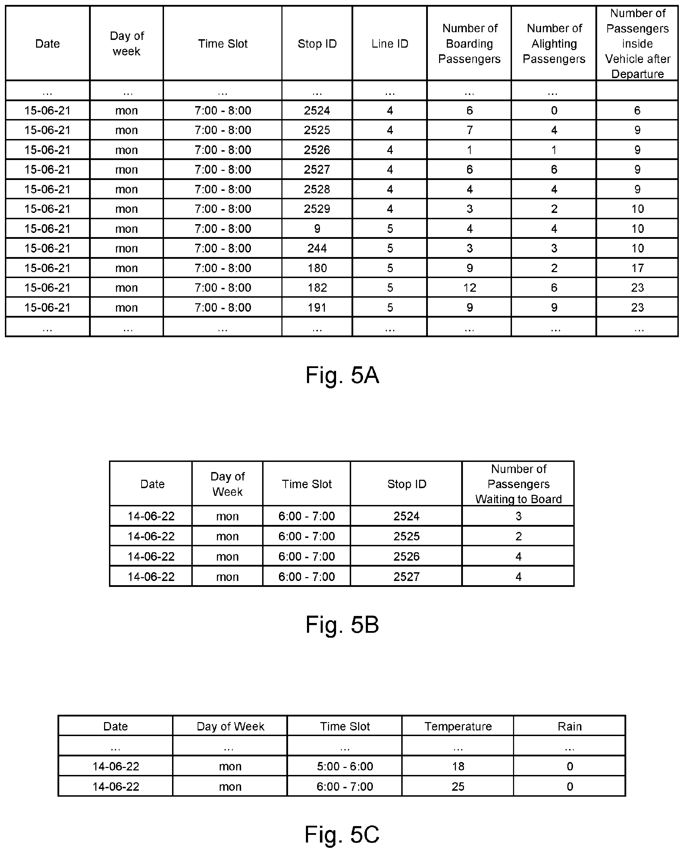

The operation of the present bus network control system will firstly be explained with reference to the bus network of Figure 2 and the flowchart of Figure 4. In Figure 2, there is a scheduled bus B (bus 110a) within the network that is scheduled to travel to stops 133, 134, 135 and 136 on the line 130. In Figure 2, Bus 110b is a preceding bus B₋₁ to bus B, as it is ahead of bus B on the line 130. Turning to Figure 4, at S110, the bus network control system obtains demand data pertaining to bus B. The demand data may include, for example, any one or more of:
- data from sensors on the buses and/or at the stops within the bus network, from which passenger number data can be derived;
- cameras on the buses and/or the stops within the bus network, images from which can be used to derive passenger number data;
- historical passenger demand data;
- weather forecast data, from which a likelihood of people using the bus network for a journey can be derived; and
- the time and/or date.
From the demand data, at S120 the control system then predicts a number of passengers boarding and/or alighting bus B at the stops 133, 134, 135 and 136 on bus B's schedule, and from this can also predict the number of passengers in the vehicle between two stops on bus B's schedule. The control system utilises machine learning algorithms in making these predictions in order to make the predictions more accurate and efficient. Examples of demand data are provided in Figures 5A - 5C, which are discussed here.

### Figure 5

Figure 5A is a table of historical passenger demand data, providing average passenger boarding numbers and alighting numbers for specific stops, on specific lines, at certain time slots, on certain dates and days of the week. From the number of passengers boarding and alighting the buses at each stop, a number of passengers inside the vehicle after departure is predicted.

Figure 5B is a table of real-time data from sensors at bus stops, which includes the number of passengers waiting to board a bus at a given stop for a specific time of day.

Figure 5C is a table of weather forecast data including the date, time range, forecast temperature (in this example in °C) in that time range and forecast rainfall (either in amount of rain, e.g., mm, or a Boolean indicating whether it is or isn't raining) in that time range.

### Back to Figure 4

Although the control system can function with only predicting the number of passengers boarding and/or alighting a single bus at a single stop in the network, the control system may also obtain the demand data and predicts the numbers of passengers boarding and/or alighting for a large proportion of, or all, of the scheduled buses in the network at a large number, or all, of the scheduled stops for each of those scheduled buses.

Returning to Figure 4, at step S210 the control system obtains operating data pertaining to one or more buses in the network, the one or more buses including bus B. The operating data may include, for example, any one or more of:
- geocoordinates and timestamps of the buses;
- geocoordinates of the bus lines and stops;
- historical travel data;
- weather forecast data;
- the time and/or date; and
- traffic data.

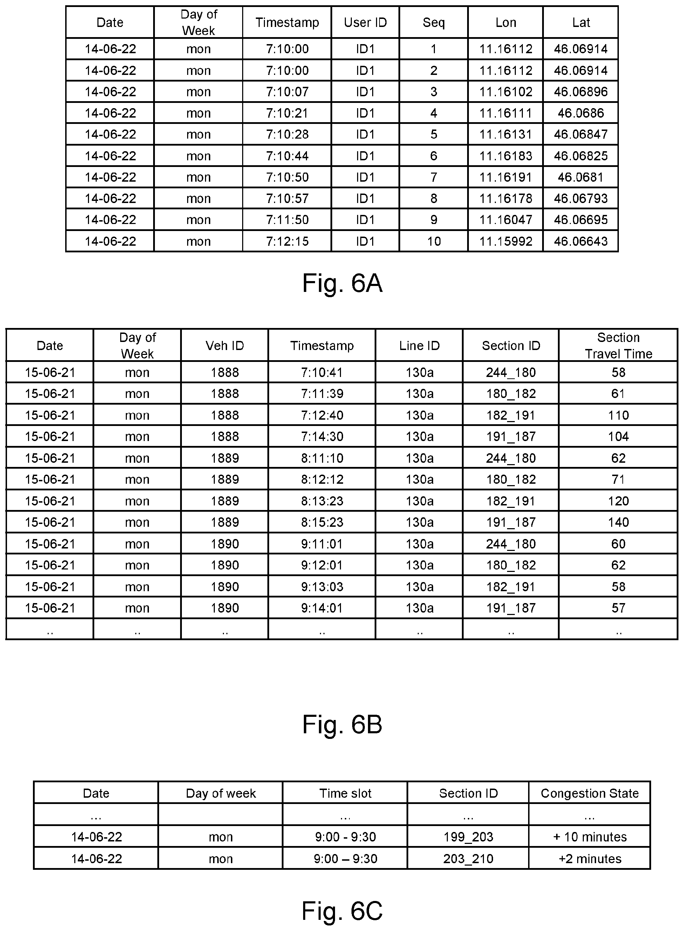

Having obtained the operating data, at S220 the control system predicts the respective arrival times of bus B at the stops on bus B's schedule by predicting the time to travel between the stops on bus B's schedule and how long the bus is stationary at each stop for passengers to alight and board. The control system utilises machine learning algorithms in making these predictions in order to make the predictions more accurate and efficient. Steps S210 and S220 are performed independently of steps S110 and S120, and can be performed in parallel, before, or after, steps S110 and S120. Examples of operating data are provided in Figures 6A - 6C, which are discussed here.

### Figure 6

Figure 6A is a table of geocoordinates and timestamps for a user on bus B currently travelling along the line 130. The geocoordinates and timestamps of the buses can be obtained from GPS sensors on the bus, or can be obtained from passenger devices (e.g. a mobile phone) of passengers who are known to be on a given bus based on ticket validation information generated on their passenger device when boarding and alighting buses. For example, in Figure 5A the geocoordinate and timestamp data is obtained from a passenger device belonging to a passenger with a user ID of ID1.

Figure 6B is a table of historical travel data, which includes the time to travel along different sections of the line 130 between stops at different times of day, different dates, and different days of the week. Each section of the line is given a section ID and the data is also associated with the vehicle that achieved that section travel time by a vehicle ID.

Figure 6C is a table of real-time traffic data, which includes the date, day of the week, time slot and for a given section of a line (represented by a section ID), the congestion state is provided, which in the case of Figure 6C is a measure of how much longer than average it will currently take to travel along that section.

Although the control system can function with only predicting the arrival time of a single bus at a single stop in the network, the control system typically obtains the operating data and predicts the arrival times for a large proportion, or all, of the scheduled buses in the network at a large proportion, or all, of the scheduled stops for each of those scheduled buses.

### Return to Figure 4

Returning to Figure 4, having predicted the arrival times at step S220 and numbers of passengers boarding and/or alighting bus B at the stops on its schedule at step S120, for a given stop S (stop 134 in Figure 1), the method moves to step S300 in which the control system predicts the average wait time of passengers at stop S for a bus travelling on line 130 that bus B is travelling on, at the time bus B is predicted to arrive at stop S. This prediction is based on the estimated number of passengers boarding and/or alighting buses at step S as arrived at from step S120 as well as the predicted arrival time of bus B at step S as arrived at from step S220. Examples of the output of step S300 of Figure 4 are illustrated in Figure 7A, which is discussed here.

### Figure 7A

Figure 7A provides the scheduled and predicted arrival times of bus B (bus 110a) at stops 133 and stop 134 (stop S), and the average passenger wait time at each of these stops at the time Bus B is predicted to arrive. At stop 133, which precedes stop S (stop 134), the average wait time of passengers for bust B is only 4 minutes and 30 seconds and bus B is predicted to arrive 30 seconds ahead of schedule. However, for stop S (stop 134), bus B is predicted to arrive 7 minutes behind schedule, and at the predicted arrival time of 07:30:00. By 07:30:00, the 9 passengers waiting at stop S will have been waiting for bus B for an average of 11 minutes.

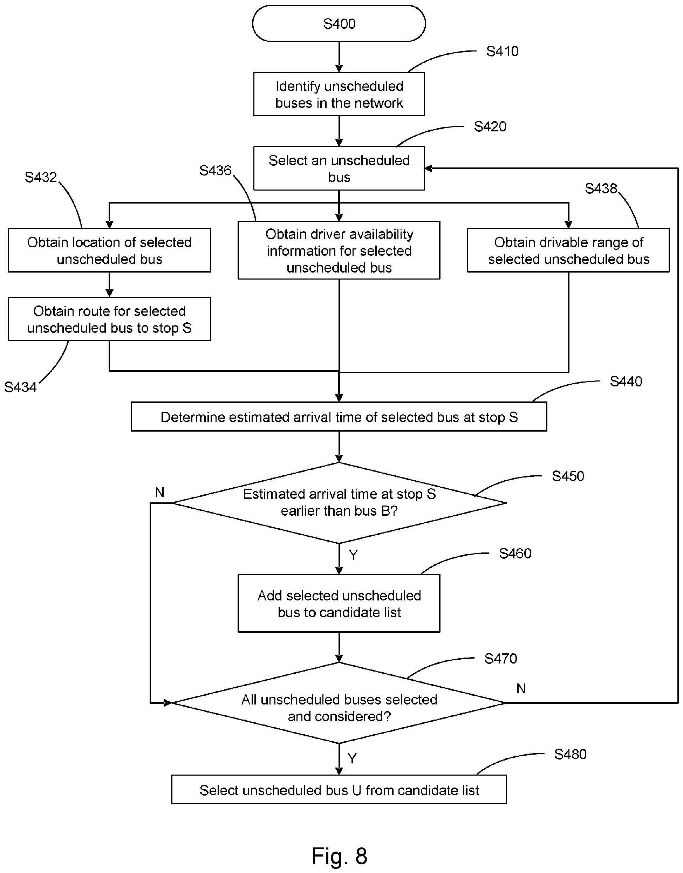

Returning to Figure 4, the control system subsequently identifies whether there is an unscheduled bus, U, amongst the unscheduled buses (bus 120a, bus 120b) that can arrive at stop S at an earlier time than bus B (S400). For example, Figure 2 illustrates the possible routes 160a, 160b that respective unscheduled buses 120a, 120b could take to stop S and consequently predicts the arrival time of the unscheduled buses at stop S. For example, Figure 7B presents the results of step S400, with the unscheduled bus 120b of the bus network in Figure 2 listed in the table of Figure 7B as being able to arrive at stop S at 07:25:00 by travelling along route 160b to stop S, which is earlier than bus B is predicted to arrive at stop S (07:30:00). In contrast, unscheduled bus 120a in the bus network of Figure 2 is only able to arrive at stop S at 07:31:30 by travelling along route 160b to stop S, which is later than bus B is predicted to arrive at stop S (07:30:00). Therefore, bus 120b is identified as an unscheduled bus, U, that can arrive at stop S at an earlier time than bus B. The unscheduled bus identification process is discussed in greater detail with reference to Figure 8.

Turning back to Figure 4, following S400, the control system checks whether an unscheduled bus U has been identified (S500) and, if so, instructs that unscheduled bus U to travel to stop S (S610) and assigns the unscheduled bus U a schedule of stops to travel along. For example, in Figure 2, bus U may be instructed to travel to stop S and then be given a schedule of stops including stops 135 and 136.

Having instructed bus U to travel to stop S, the schedule of buses arriving at stop S can be updated by the bus network control system. For example, Figure 7C is a table of the next three buses to arrive at stop 134 in the bus network of Figure 2. Firstly, bus 110b will arrive at 7:13:00, then bus 120b will arrive at 07:25:00 and then bus 110a will arrive at 07:30:00.

The data in Figure 7C also illustrates the impact of identifying and instructing an unscheduled bus to travel to stop S on the average wait time of passengers at stop S. Buses are scheduled to arrive at stop 134 every 10 minutes, meaning that the average wait time of passengers, assuming a uniform rate of passengers arriving at stop 134 to catch a bus, is 5 minutes. Before bus 120b is instructed to travel to stop S, the average wait time of passengers for bus 110b is predicted to be 5 minutes 15 seconds, (because bus 110b is predicted to be 30 seconds late to arrive) and the average wait time of passengers for bus 110a is predicted to be 8 minutes (because bus 110b is predicted to depart at 7:14:00 and bus 110a is predicted to arrive at 7:30:00). However, once bus 120b is instructed to travel to stop S and has a predicted arrival time of 7:25:00, passengers that would otherwise be waiting for bus 110a at the time bus 120b is predicted to arrive can board bus 120b and thus have their predicted average waiting time reduced to 5 minutes and 30 seconds, and the reduced predicted average wait time for any passengers arriving at stop S after bus 120b departs will be only 2 minutes and 15 seconds.

If it is determined at step S500 that an unscheduled bus U has not been identified at step S400, then the control system may proceed to step S505, where another bus and/or stop within the bus network is considered. In other words, following a negative determination at step S500, the control system may follow the flowchart of Figure 4 for another scheduled bus and/or stop within the bus network.

### Figure 8

The flowchart of Figure 8 provides further detail on a method by which the control system can identify whether there is an unscheduled bus, U, that can arrive at stop S at an earlier time than bus B (step S400 of Figure 4). The flowchart in Figure 8 will be explained in relation to the bus network illustrated in Figure 2. At S410, the unscheduled buses within the network are identified by the control system: buses 120a and 120b in Figure 2. One of the unscheduled buses is then selected for consideration, for example bus 120a, and data about unscheduled bus 120a is obtained, including any one or more of:
- the location of the unscheduled bus 120a (S432)
- a route for the unscheduled bus 120a to bus stop S (S434)
- the availability of a driver for unscheduled bus 120a (S436); and
- the drivable range of unscheduled bus 120a (S438).

For example, the location of the unscheduled bus 120a can be obtained from a GPS device located in bus 120a and a route for bus 120a to stop S obtained from mapping software, preferably using real-time congestion data. It is also useful to obtain information about whether there is a driver available to drive the bus; for example, for bus 120a, which is located in the depot 150, it is possible that there is not a driver available to drive bus 120a to stop S because the drivers are all assigned to other, scheduled, buses, or are otherwise unavailable, e.g., having a break. Similarly, for bus 120b, which is located outside the depot 150, it is possible that the driver has just completed a schedule and is required to have a break before commencing another schedule. Finally, it is also useful to obtain information about the drivable range of the unscheduled bus, because the bus may be mid re-fuelling / re-charging, or in need of fuelling / charging before it can travel to stop S.

Based on the data obtained about the selected unscheduled bus 120a, the control system predicts an arrival time of bus 120a at stop S. For example, if the bus is mid-recharging and has 3 minutes of charging remaining, and stop S is a 16 minute drive from stop S, then the control system determines the predicted arrival time of bus 120a as 19 minutes from the present time. As listed in Figure 7B, based on the data obtained on the unscheduled bus, the predicted arrival time of bus 120a at stop S would be 7:31:30. At S450, the control system then checks if the predicted arrive time of unscheduled bus 120a at stop S (7:31:30) is earlier than the predicted arrival time of bus B at stop S (7:30:00). The predicted arrival time of unscheduled bus 120a is not earlier than the predicted arrival time of bus B, and thus the control system proceeds to step S470.

At S470, the control system determines that bus 120b has not yet been selected and considered, and therefore returns to S420 and selects bus 120b. The control system then determines the predicted arrival time of bus 120b at stop S in the same manner as for bus 120a. For example, in Figure 7B the predicted arrival time of bus 120b at stop S is 07:25:00. At S450, it is determined that the predicted arrival time of bus 120b at stop S (07:25:00) is earlier than the predicted arrival time of bus B at stop S (07:30:00) and accordingly bus 120b is added to a candidate list of unscheduled buses (S460). Having considered buses 120a and 120b, all of the unscheduled buses in the network have been selected and considered, and accordingly an unscheduled bus U from the candidate list S480 is selected for dispatch to stop S (S480). In the present case, the candidate list only contains bus 120b, so bus 120b is selected as bus U. However, where the candidate list contains multiple unscheduled buses, the control system may select a bus based on additional factors such as which unselected bus in the candidate list can reach stop S the earliest and which unselected bus in the candidate list is geographically closest to stop S.

### Figure 9

The flowchart in Figure 9 is a modification of the flowchart in Figure 4 for the operation of the control system. Where it shares features, like features are indicated by like reference numerals. The first modification to the operation of the control system in Figure 9 is that step S350 is introduced, wherein the predicted average wait time of passengers at stop S for another bus travelling on the line 130 of bus B at the time bus B is predicted to arrive at stop S is compared to a threshold wait time. For example, if buses travelling on the line 130 of bus B are scheduled to arrive at stop S every 10 minutes, then a threshold wait time may be set as 6 minutes, on the basis that the statistical average wait time of passengers at stop S to catch a bus, assuming a uniform rate of passengers arriving at stop S, is 5 minutes and a delay of less than two minutes for a bus arriving at stop S is deemed acceptable. The control system operating according to the flowchart of Figure 9 only proceeds to identify an unscheduled bus U at step S400 if the control system determines at step S350 that the predicted average wait time exceeds the threshold wait time. If it is determined at step S350 that the predicted average wait time does not exceed the threshold wait time, then the control system may proceed to step S355, where another bus or stop within the bus network is considered. In other words, following a negative determination at step S350, the control system may follow the flowchart of Figure 9 for another bus and/or stop within the bus network.

Including step S350 facilitates more efficient use of unscheduled buses 120 within the bus network, as unscheduled buses are not instructed to travel to stops where the scheduled bus B is only slightly delayed and passengers at stop S are only waiting for slightly longer than expected for a bus based on the schedule of buses for stop S, meaning that an unscheduled bus that would otherwise have been instructed to travel to stop S remains unscheduled within the network and available if another stop within the network is subsequently identified as having a predicted average wait time for a bus that exceeds a threshold wait time for that stop.

The second modification of the operation of the control system in Figure 9 is that steps 510, 520 and 530 are introduced. If it is determined at step S500 that an unscheduled bus U has not been identified at step S400, then the control system may proceed to step S505, where another bus and/or stop within the bus network is considered. In other words, following a negative determination at step S500, the control system may follow the flowchart of Figure 9 for another scheduled bus and/or stop within the bus network. However, if it is determined at step S500 that an unscheduled bus U has been identified at step S400, the control system determines a reduced predicted average wait time of passengers at stop S based on bus U being instructed to travel to stop S (S510). For example, in Figure 7C, the instruction of bus 120b to travel to stop S would reduce the predicted average wait time of passengers arriving at stop S between 7:14:00 and 07:25:00 from 8 minutes based on the time that bus B is predicted to arrive at stop S (7:30:00) to 5 minutes and 30 seconds based on the time that bus U would be predicted to arrive at stop S (7:25:00) if bus U is instructed to travel to stop S. Having determined the reduced predicted average wait time of passengers at stop S at the predicted arrival time of bus U at stop S, the control system considers whether the reduced predicted average wait time is less than the threshold wait time (S520). If the reduced predicted average wait time exceeds the threshold wait time, the control system does not instruct bus U to travel to stop S (S530), but otherwise can instruct unscheduled bus U to travel to stop S (S610) and can further assign unscheduled bus U a schedule of stops (S620). Referring back to the data in Figure 7C, the reduced predicted average wait time of passengers at stop S at the time bus U is predicted to arrive at stop S is 00:05:30, which is less than the threshold wait time of 6 minutes. On this basis, the control system operating according to the flowchart in Figure 9 proceeds to instruct bus U to travel to stop S (S610) and assigns bus U a schedule of stops (S620).

### Figure 10

The flowchart in Figure 10 is a modification of the flowchart in Figure 4 for operation of a bus network control system. Where it shares features, like features are indicated by like reference numerals. The flowchart in Figure 10 is intended for bus networks comprising plural scheduled buses travelling along a line of the bus network, such as is illustrated in Figure 3. The control system is further configured to predict a number of passengers boarding and/or alighting a plurality of scheduled buses at a plurality of the stops on said plurality of scheduled buses' respective schedules and predict respective arrival times of a plurality of scheduled buses at a plurality of the stops on said plurality of scheduled buses' respective schedules. The modification to the operation of the control system relates to two additional analysis stages in the flowchart of Figure 10 that are to be conducted by the control system: holding operation analysis (S365) and stop skipping analysis (S370). Although the flowchart in Figure 10 includes both holding operation analysis and stop skipping analysis being conducted in parallel, it is possible for only one of these analyses to be conducted, and for them to be conducted sequentially (in either order) as opposed to in parallel.

Having predicted the average wait time of passengers for a bus at stop S at the time that bus B is predicted to arrive at stop S (S300) as described above in relation to Figure 4, the control system determines an aggregate wait time of passengers (S360) that is the sum of the predicted average wait time of passengers at one or more of stops on bus B's schedule. Referring to Figure 3, for example, the aggregate wait time of bus B (110b) in Figure 3 may be taken as the sum of the average wait time of passengers at some, or all of, stops 133, 134, 135 and 136.

Subsequently, the control system conducts holding operation analysis (S365) and stop skipping operation analysis (S370).

Broadly, the holding operation analysis (S365) involves the control system considering whether instructing a preceding bus, B₋₁, to bus B, that is travelling along the same line, L, that bus B is travelling along, to be held at stop S for a period of time exceeding a stop time for stop S listed in the schedule of bus B₋₁ would reduce the aggregate wait time, and if so, how long that preceding bus B₋₁ should be held at stop S. An implementation of holding operation analysis (S365) is described in more detail in relation to Figure 11.

Broadly, the stop skipping operation analysis (S370) involves the control system considering whether instructing bus B to skip a preceding stop, S₋₁, to stop S, that bus B is otherwise scheduled to stop at, would reduce the aggregate wait time. An implementation of stop skipping operation analysis (S370) is described in more detail in relation to Figure 12.

Having conducted the holding operation analysis (S365) and stop skipping analysis (S370), the control system proceeds to issue instructions to the scheduled buses within the network based on those analyses (S380). These instructions may include an instruction for a preceding bus B₋₁ to hold at stops S for a period of time exceeding a stop time for stop S listed in the schedule of bus B₋₁ and/or an instruction for bus B to skip a preceding stop S₋₁. Alternatively, the in instruction may be for a scheduled bus to continue operating in accordance with its schedule. Based on the instructions issued at step S380 and the average wait time of passengers predicted at S300, at S390, the control system determines a modified predicted average wait time of passengers at stop S (i.e. taking into account the effects of any stop skipping operation(s) and holding operation(s) instructed). At S395, this modified predicted average wait time determined at S390 is compared to a threshold wait time to determine whether to proceed with S400 of identifying whether there is an unscheduled bus, U, within the bus network that can arrive at stop S at an earlier time than bus B. If it is determined at step S395 that the reduced predicted average wait time of passengers at stop S does not exceed the threshold wait time, then the control system may proceed to step S396 where there is no consideration as to whether there is an unscheduled bus, U, that can arrive at stop S at an earlier time than bus B. In other words, because the holding operation and/or stop skipping operation has already reduced the predicted average wait time of passengers at stop S to not be in excess of the threshold wait time, then consideration of unscheduled buses is unnecessary. Instead, the control system proceeds to consider another scheduled bus and/or stop within the bus network. However, if the modified predicted average wait time at stop S for bus B is greater than a threshold wait time, the control system proceeds to S400. Including S395 facilitates more efficient use of unscheduled buses 120 within the bus network, as unscheduled buses are not instructed to travel to stops where the scheduled bus B is only slightly delayed and passengers at stop S are only waiting for slightly longer than expected for a bus based on the schedule of buses for stop S. This means that an unscheduled bus that would otherwise have been instructed to travel to stop S remains unscheduled within the network and available if another stop within the network is subsequently identified as having a predicted average wait time for a bus that exceeds a threshold wait time for that stop. The threshold wait time for the purpose of S395 is typically the same as the threshold wait time for the purpose of S350.

If a positive determination is made at S395 (i.e. the modified predicted average wait time exceeds the threshold wait time), then the control system proceeds to S400 and the operations that follow are the same as those described in relation to Figure 3.

### Figure 11

The flowchart of Figure 11 provides further detail on a method by which the control system can carry out holding operation analysis. That is, how the control system can determine whether a preceding bus B₋₁, to bus B, that is travelling along the same line, L, that bus B is travelling along, should be held at stop S for a period of time exceeding a stop time for stop S listed in the schedule of bus B₋₁ in order to reduce the aggregate wait time of passengers. The analysis also determines, if it has determined that holding a bus is appropriate, how long that preceding bus B₋₁ should be held at stop S. The flowchart of Figure 11 will be described with reference to the bus network illustrated in Figure 3.

At S365-1, a preceding bus, B₋₁, to bus B is identified that is: (i) travelling along the same line, L, that bus B is travelling along and (ii) scheduled to arrive at stop S at an earlier time than bus B. For example, in Figure 2, bus 110b is a preceding bus. Whilst the preceding bus B₋₁ in Figure 3 is the scheduled bus directly preceding bus B (i.e. there is not another scheduled bus positioned between bus B and bus B₋₁ on line 130a), a preceding bus identified at S365-1 does not need to be a directly preceding bus. For example, if an intermediate bus were present between buses B and B₋₁ in Figure 3, but the control system determined from the demand data that this intermediate bus would be full of passengers at stop S, then holding bus B₋₁ at stop S would influence the average wait time of passengers at stop S to board a bus on the line L of bus B, and in turn influence the aggregate wait time of passengers.

At S365-2, a preceding bus, B₋₂, to bus B and bus B₋₁ is identified that is: (i) travelling along the same line, L, that buses B and B₋₁ are travelling along, and (ii) scheduled to arrive at stop S at a earlier time than buses B and B₋₁. For example, in Figure 3, bus 110d can be identified as preceding bus B₋₂. Whilst the preceding bus B₋₂ in Figure 3 is a scheduled bus directly preceding bus B₋₁ (i.e. there is not another scheduled bus positioned between bus B₋₁ and bus B₋₂ on line 130a), a preceding bus B₋₂ identified at S365-2 does not need to be a bus that directly precedes bus B₋₁. For example if an intermediate bus were present between buses B₋₁ and B₋₂ in Figure 3, but the control system determined from the demand data that this intermediate bus would be full of passengers on arrival at stop S, then it is more relevant for the control system to consider bus B₋₂ than this intermediate bus, as the schedule of bus B₋₂ will have a greater influence on the average wait time of passengers to board a bus on the line L of bus B than the schedule of an intermediate bus that is full of passengers on arrival at stop S.

Having identified preceding buses B₋₁ and B₋₂, the control system proceeds to obtain one or more, and in some examples all of:
the scheduled departure time of bus B₋₂ from stop S (S365-3),
the predicted arrival times of buses B and B₋₁ at stop S (S365-4),
the predicted number of passengers boarding and/or alighting buses B and B₋₁ at stop S (S365-5), and
the predicted number of passengers in buses B and B₋₁ at stop S (S365-6).

Based on the above information obtained by the control system, the control system is configured to perform step S365-7 in which it determines whether holding preceding bus B₋₁ at stop S for a period of time that exceeds a stop time for stop S listed in the schedule of bus B₋₁ would reduce the aggregate wait time. The stop time is, for example, the time allocated in a bus's schedule between arriving at a stop and departing that stop for alighting and/or boarding of passengers. Based on the determination at step S365-7, the control system determines a duration for which bus B₋₁ should be instructed to be held at stop S. For example, if it is determined at step S365-7 that holding the bus B₋₁ at stop S for a period exceeding a stop time on the schedule of bus B₋₁ would reduce the aggregate wait time, then at step S365-8, the control system determines for what duration bus B₋₁ should be held at stop S in excess of the scheduled stop time. However, if the determination at step S365-7 is that holding bus B₋₁ at stop S for longer than the scheduled stop time does not reduce the aggregate wait time, then at step S365-8, the control system would determine the suitable holding duration at stop S to be the scheduled stop time.

Although the implementation of the holding operation analysis in Figure 11 includes consideration of two preceding buses, B₋₁ and B₋₂, to bus B, it can be appreciated that holding operation analysis can be conducted through consideration of only one preceding bus, or indeed more than two preceding buses.

### Figure 12

The flowchart of Figure 12 provides further detail on a method by which the control system can carry out stop skipping operation analysis, that is, how the control system can determine whether a preceding stop S₋₁ to stop S on the line L of bus B should be skipped by bus B on route to stop S in order to reduce the aggregate wait time of passengers. The flowchart of Figure 12 will be described with reference to the bus network illustrated in Figure 3.

At S370-1, a preceding stop, S₋₁, to stop S on the line L that bus B is travelling along which bus B is also scheduled to stop at ahead of stopping at stop S is identified. For example, in Figure 3, stop 133, labelled S₋₁, is a preceding stop to stop 134, labelled stop S. Whilst stop 133 is the stop directly preceding stop 134 in Figure 3 (i.e. there is not an intermediate stop in between stops 133 and 134 on line 130a), the preceding stop S₋₁ identified by the control system for the purpose of stop skipping operation analysis does not need to be an directly preceding stop to stop S. For example, even if there was an intermediate stop between stops 133 and 134 on line 130a of the network in Figure 3, skipping stop 133 may still influence the aggregate wait time of passengers.

Having identified a preceding stop S₋₁, the control system proceeds to obtain one or more of, and in some examples all of:
the predicted travel time of buses on line L between stops on bus B's schedule (S370-2),
the predicted arrival time of buses on line L at stops on bus B's schedule (S370-3),
the predicted number of passengers boarding and/or alighting buses on line L at stops on bus B's schedule (S370-4), and
the predicted number of passengers in buses on line L.

Based on the above information obtained by the control system, the control system is configured to determine whether instructing bus B to skip the identified preceding stop S₋₁ would reduce the aggregate wait time of passengers. For example, in relation to Figure 3, the control system may determine that, because buses B and B₊₁ are scheduled to arrive at stop S₋₁ in quick succession, the aggregate wait time of passengers can be reduced by instructing bus B to skip stop S₋₁ and proceed directly to stop S, on the basis that bus B₊₁ can collect passengers waiting at stop S₋₁ for a bus. Accordingly, no passengers are left stranded at stop S₋₁ by the skipping operation and the increase in the wait time of passengers at stop S₋₁ as a result of bus B skipping stop S₋₁ is outweighed by the decrease in the wait time of passengers at stop S as a result of bus B skipping stop S₋₁, such that the aggregate wait time can be reduced through the stop skipping operation.

### Figure 13

Figure 13 illustrates a bus network control system 1100 which implements the methods discussed herein, and the units that the control system 1100 comprises. In Figure 13, information is represented by white boxes and operations are represented by dark grey boxes.

The bus network control system 1100 of Figure 13 comprises the following units:
- a demand prediction unit 1101 configured to predict a number of passengers boarding and/or alighting a given scheduled bus at one or more of the stops on that scheduled bus's schedule (for example, by being configured to perform steps S110, S120);
- an arrival time prediction unit 1102 configured to predict respective arrival times of a given scheduled bus at one or more of the stops on that scheduled bus's schedule based on the operating data (for example, by being configured to perform steps S210 and S220);
- a schedule management unit 1103 configured to predict, for a given stop, S, that a given scheduled bus, B, is scheduled to stop at, an average wait time of passengers at a stop S to board a bus travelling on the line L of bus B at the time bus B is predicted to arrive at stop S (for example, by being configured to perform steps S300 - S620);
- a database 1104 for storing demand data and operating data, including geo-coordinates of bus routes; bus schedules; historical data from passenger smart cards, bus sensors, and bus stop sensors; information on the weather forecasts; the time of day; the day of the week; any information on special events occurring; data on whether buses are scheduled or unscheduled; the location of the buses; the location and availability of bus drivers; and the battery and/or fuel status of buses to determine their drivable range; and
- a feedback and update unit 1105 configured to generate updated bus labels for sending to display devices connected to the bus network control system such as bus display boards and bus stop display boards 1400, and passenger mobile devices 1500.

Further to the units within the bus network control system 1100, Figure 13 includes several other devices and systems that the bus network control system 1100 interacts with. The demand prediction unit 1101, arrival time prediction unit 1102 and database 1104 all obtain data from a bus stop sensor system 1102, which includes sensors for obtaining passenger counts on buses and at stops, as well as sensors for capturing bus position and speed data, such as GPS sensors. The database 1104 stores such sensor data as historical data, whilst the demand prediction unit 1101 and arrival time prediction unit 1102 use the data for making their respective predictions. The schedule management unit 1104 outputs its decisions regarding holding operations, stop skipping operations and unassigned bus instruction to a bus driver device 1600 and an operation control and decision-making unit 1300. The bus driver device 1600 provides information on driver availability, bus range, bus availability and bus location to the database 1104 for use by the schedule management unit 1103 in conducting schedule management analysis, including unscheduled bus identification.

Based on stop skipping operation decisions, holding operation decisions and results of unassigned bus identification from the schedule management unit 1103, a graphical user interface (GUI) can be generated for display on the bus driver device (1600), providing operation instructions / suggestions / alerts in real time for the bus driver. The bus driver device GUI is discussed further in relation to Figure 17. In the case of the buses in the bus network having a low level of driver automation, the bus driver may be notified of the instruction via the information in the GUI (i.e. instructing them to skip a stop S₋₁, hold for a given duration at a stop or, if the bus is an unscheduled bus U, drive directly to a stop S). Alternatively, where the buses within the bus network are highly automated (e.g. self-driving, either with or without a human operator present), then processing units controlling the bus will follow the instructions provided by the schedule management unit 1103 automatically.

Decisions taken on the bus driver device 1600 are fed to the operation control and decision-making unit 1300 in order to provide operation control and decision-making unit 1300 with up-to-date information on the operation of scheduled and unscheduled buses within the network.

Based on the up-to-date information on the operation of scheduled and unscheduled buses within the network, updates to the schedules of buses within the network, including predicted arrival time, and crowdedness indices of buses within the network (i.e. how full a given bus is) can be provided to the feedback and update unit 1105 of the control system 1100. The feedback and update unit 1105 then facilitates the updating of the bus labels for presentation on display boards 1400 on the side of buses and at bus stops, and information for display on passenger devices 1500 to reflect the latest schedule data and crowdedness index for a bus. The bus labels are discussed further in relation to Figures 14 and 15 and the information for display on a passenger device 1500 is discussed further in relation to Figure 16.

The various components of the bus network control system, for example the demand prediction unit, schedule management unit, and arrival time prediction unit, can be provided as one of more pieces of computer software operating on one or more computing devices. For example, the bus network control system may be implemented on a server or cluster of servers and the various components instantiated as software running on the server or across the cluster of servers. In other examples the system may be a distributed computer network and some or each of the components may be implemented as discrete computing devices.

### Figure 14

Figure 14 illustrates a bus and bus labels that are displayed on display boards on the outside of a bus in order to provide information to passengers waiting at stops within the bus network that the bus passes or stops at. The information in the bus labels of Figure 14 include the bus number ("110a"), the crowdedness index of the bus (represented by both the text "very crowded" and the symbol containing three illustrations of passengers), the line of the bus ("130a") and the final destination of that bus ("downtown"). As discussed in relation to Figure 13, the updates received from the decision-making unit 1300 on bus schedules and crowdedness indices are provided to the feedback and update unit 1105 of the control system 1100 so that updated bus labels can be generated and sent out to the buses and stops for display.

### Figure 15

Figure 15 is similar to Figure 14 in that it illustrates bus labels for display on a display board. However, the labels in Figure 15 are for a display board at a bus stop. The display in Figure 15 includes bus labels for a plurality of buses (110f, 110a, 110e) scheduled to stop at the stop at which the labels are intended to be displayed at. Each bus label in Figure 15 includes information on the line of the bus ("130b", "130a"), the terminus ("University", "Downtown"), the bus number ("110f", "110a", "110e"), the scheduled arrival time of the bus at the stop ("3 mins", "4 mins", "7 mins") and the crowdedness index (represented by both the text "few seats available", "very crowded", "many seats available" and the different symbols). As discussed in relation to Figure 13, the updates received from the decision-making unit 1300 on bus schedules and crowdedness indices are provided to the feedback and update unit 1105 of the control system 1100 so that updated bus labels can be generated and sent out to the bus stops for display.

### Figure 16

Figure 16 illustrates a GUI for display on a passenger device 1500 (e.g. a mobile phone, or other device with a screen, of a passenger of the bus network). The passenger can use an application on their device 1500 for planning a journey through the bus network from one stop to another. For example, in Figure 16 the passenger is using the application to plan a journey from stop 138 to stop 136 in the bus network illustrated in Figure 3. Based on the passenger's desired journey and the information provided from the feedback and update unit 1105, the application suggests travel options to the passenger. For example, in Figure 16, the display includes two travel options, a first option using bus 110f and bus 110a and a second option using bus 110f and 110e. The first option arrives at the passenger's destination three minutes earlier than the second option, but bus 110a used in the first option has the crowdedness index "very crowded", whereas bus 110e used in the second option has the crowdedness index "many seats available". Accordingly, the passenger is informed about the second option of waiting at transit stop 134 for the second bus (110e) after bus 110f arrives rather than boarding the first bus to arrive (110a). The passenger may select the second option if they do not mind the three-minute delay relative to the first option and would prefer a more comfortable journey on a less crowded bus.

### Figure 17

Figures 17A and 17B illustrate GUIs for display on bus driver devices 1600.

Figure 17A illustrates a GUI for display on a scheduled bus, B, on line 130a with the terminus "downtown". The GUI provides a map of the schedule of the bus, including the locations of stops remaining on the bus's schedule (stops 4, 5 and 6), the route between those stops (the dotted, dashed and solid lines between the stops) the estimated arrival time (ETA) at those stops, and how much each ETA is delayed relative to the bus's schedule ("10 minutes", "15 minutes", "11 minutes"). The different line types for the route between stops illustrates different levels of congestion, dotted being most congested, solid being least congested and dashed being an intermediate state. The GUI further includes instructions to the bus from the schedule management unit 1103 ("stop and depart as usual").

Figure 17B illustrates a GUI for display on an unscheduled bus, U, that has been identified as being able to arrive at stop 5 on line 130a at an earlier time than the scheduled bus B of Figure 17A. Bus U has received instructions to travel to stop S via the route indicated on the map in the GUI, and has also been assigned a schedule of stops to follow once it has arrived at stop 5, corresponding to line 130a with the terminus "downtown". The GUI indicates that bus U will arrive at stop 5 on time and then also arrive at stop 6 on time (i.e. in accordance with the schedule of bus B that has been delayed due to congestion).

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A bus network control system (1100) for controlling a plurality of buses (110, 120) operating as at least a part of a bus network (100);
wherein the bus network (100) comprises:
one or more scheduled buses (110), operating according to respective schedules;
one or more unscheduled buses (120); and
one or more lines (130), each line being formed from a plurality of sequentially connected stops (131, 132, 133, 134, 135, 136, 137, 138, 139), wherein the schedule of the or each scheduled bus (110) indicates one or more stops (131, 132, 133, 134, 135, 136, 137, 138, 139) corresponding to a section of a respective line;
the bus network control system (1100) comprising:
a demand prediction unit (1101) configured to:
obtain demand data pertaining to one or more of the scheduled buses (110); and
predict a number of passengers boarding and/or alighting a given scheduled bus (110) at one or more of the stops (131, 132, 133, 134, 135, 136, 137, 138, 139) on that scheduled bus's schedule based on the demand data;
an arrival time prediction unit (1102) configured to:
obtain operating data pertaining to one or more scheduled buses (110); and
predict respective arrival times of a given scheduled bus (110) at one or more of the stops (131, 132, 133, 134, 135, 136, 137, 138, 139) on that scheduled bus's schedule based on the operating data; and
a schedule management unit (1103) that, for a given stop, S, that a given scheduled bus, B, is scheduled to stop at, is configured to:
obtain the predicted number of passengers boarding and/or alighting scheduled buses (110) at stop S from the demand prediction unit (1101);
obtain the predicted arrival time of bus B at stop S from the arrival time prediction unit (1102);
predict an average wait time of passengers at stop S to board a bus (110) travelling on the line L of bus B at the time bus B is predicted to arrive at stop S, based on the predicted number of passengers boarding and/or alighting buses (110) at stop S and the predicted arrival time of bus B at stop S; and
identify whether there is an unscheduled bus, U, that can arrive at stop S at an earlier time than bus B, and if so, instruct bus U to travel to stop S and assign the unscheduled bus U a schedule of stops.

2. The bus network control system (1100) according to claim 1, wherein the schedule management unit (1103) is further configured to identify whether there is a bus U that can arrive at stop S at an earlier time than bus B based on one or more of:
the location of bus U relative to stop S;
the distance and traffic condition of a route to stop S for bus U;
the availability of a driver for bus U; and
the drivable range of bus U.

3. The bus network control system (1100) according to any preceding claim, wherein:
the schedule management unit (1103) is further configured to determine whether the predicted average wait time of passengers at stop S exceeds a threshold wait time; and
the schedule management unit (1103) is further configured such that if the schedule management unit (1103) identifies an unscheduled bus, U, that can arrive at stop S at an earlier time than bus B, the schedule management unit (1103) does not to instruct bus U to travel to stop S and does not to assign bus U a schedule of stops if the predicted average wait time of passengers at stop S does not exceed the threshold wait time.

4. The bus network control system (1100) according to claim 3, wherein the schedule management unit (1103) is further configured such that if the schedule management unit (1103) identifies an unscheduled bus, U, that can arrive at stop S at an earlier time than bus B, the schedule management unit (1103):
determines a reduced predicted average wait time of passengers at stop S at a predicted arrival time of bus U at stop S if bus U is instructed to travel to stop S; and
does not instruct bus U to travel to stop S and does not to assign bus U a schedule of stops if a reduced predicted average wait time is greater than the threshold wait time.

5. The bus network control system (1100) according to any preceding claim for a bus network (100) comprising plural scheduled buses (110), wherein:
the demand prediction unit (1101) is further configured to:
obtain demand data pertaining to a plurality of scheduled buses (110); and
predict a number of passengers boarding and/or alighting a plurality of scheduled buses (110) at a plurality of the stops (131, 132, 133, 134, 135, 136, 137, 138, 139) on said plurality of scheduled buses' respective schedules based on the demand data; and
the arrival time prediction unit (1102) is further configured to:
obtain operating data pertaining to a plurality of scheduled buses (110); and
predict respective arrival times of a plurality of scheduled buses (110) at a plurality of the stops (131, 132, 133, 134, 135, 136, 137, 138, 139) on said plurality of scheduled buses' respective schedules based on the operating data; and
the schedule management unit (1103) is further configured to:
obtain the predicted number of passengers boarding and/or alighting scheduled buses (110) at stop S from the demand prediction unit (1101);
obtain the predicted arrival time of bus B at stop S from the arrival time prediction unit (1102);
predict an average wait time of passengers at stop S to board a bus (110) travelling on the line L of bus B at the time bus B is predicted to arrive at stop S, based on the predicted number of passengers boarding and/or alighting buses (110) at stop S and the predicted arrival time of bus B at stop S; and
identify whether there is an unscheduled bus, U, that can arrive at stop S at an earlier time than bus B, and if so, instruct bus U to travel to stop S and assign the unscheduled bus U a schedule of stops;
for each stop, S, of a plurality of stops (131, 132, 133, 134, 135, 136, 137, 138, 139) that each bus, B, of a plurality of scheduled buses (110) is scheduled to stop at.

6. The bus network control system (1100) according to claim 5, wherein the schedule management unit (1103) is further configured to:
identify a preceding bus B₋₁ travelling along line L and scheduled to arrive at stop S at an earlier time than bus B; and
determine whether holding bus B₋₁ at stop S for a period of time exceeding a stop time on the schedule of bus B₋₁ would reduce an aggregate wait time that is the sum of the predicted average wait time of passengers at a one or more stops (131, 132, 133, 134, 135, 136, 137, 138, 139) on bus B's schedule, and if so:
determine the duration for which bus B₋₁ should be held at stop S,
instruct bus B₋₁ to hold at stop S for the determined duration, and
determine a modified predicted average wait time of passengers at stop S;
prior to determining whether there is an unscheduled bus U that can arrive at stop S at an earlier time than bus B.

7. The bus network control system (1100) according to claim 6, wherein the schedule management unit (1103) is configured to determine the duration for which the preceding bus B₋₁ should be held at stop S based on one or more of:
the departure time of a bus preceding bus B₋₁ from stop S;
the predicted arrival times of buses B₋₁ and B at stop S;
the predicted number of passengers boarding and/or alighting buses B₋₁ and B at stop S; and
a predicted number of passengers in buses B₋₁ and B at stop S.

8. The bus network control system (1100) according to any of claims 5 to 7, wherein the schedule management unit (1103) is further configured to:
identify a preceding stop S₋₁ that bus B is scheduled to stop at ahead of stopping at stop S; and
determine whether skipping stop S₋₁ would reduce an aggregate wait time that is the sum of the predicted average wait time of passengers at one or more stops (131, 132, 133, 134, 135, 136, 137, 138, 139) on bus B's schedule, and if so:
instruct bus B to skip stop S₋₁, and
determined a modified predicted average wait time of passengers at stop S;
prior to determining whether there is an unscheduled bus U that can arrive at stop S at an earlier time than bus B.

9. The bus network control system (1100) according to claim 8, wherein the schedule management unit (1103) is configured to determine whether bus B skipping stop S₋₁ on line L would reduce the aggregate wait time of passengers based on one or more of:
the predicted travel time of buses on line L between stops on bus B's schedule;
the predicted arrival times of buses on line L at stops on bus B's schedule;
the predicted number of passengers boarding and/or alighting scheduled buses (110) on line L at stops on bus B's schedule; and
predicted numbers of passengers in buses on line L.

10. The bus network control system (1100) according to any preceding claim, wherein the demand data includes one or more of:
data from sensors on the buses (110, 120) and/or at the stops (131, 132, 133, 134, 135, 136, 137, 138, 139);
cameras on the buses (110, 120) and/or at the stops (131, 132, 133, 134, 135, 136, 137, 138, 139);
historical passenger demand data;
weather forecast data; and
the time and/or date for which the number of passengers boarding and/or alighting is to be predicted.

11. The bus network control system (1100) according to any preceding claim, wherein the operating data includes one or more of:
geocoordinates and timestamps of the buses (110, 120);
geocoordinates of the bus lines (130) and stops (131, 132, 133, 134, 135, 136, 137, 138, 139);
historical passenger demand data;
weather forecast data;
the time and/or date for which the respective arrival times are to be predicted;
bus schedules; and
traffic data.

12. The bus network control system (1100) according to any preceding claim, further comprising a feedback and update unit (1105) configured to:
receive an instruction issued by the schedule management unit (1103) to a bus (110, 120);
update that bus's schedule and a crowdedness index of that bus based on that instruction; and
output the updated schedule and crowdedness index to a display.

13. The bus network control system (1100) according to any preceding claim, wherein the bus network control system (1100) is configured to use machine learning for one or more of:
predicting the number of passengers boarding and/or alighting a given scheduled bus (110) at one or more of the stops (131, 132, 133, 134, 135, 136, 137, 138, 139) on that scheduled bus's schedule;
predicting respective arrival times of a given scheduled bus (110) at one or more of the stops (131, 132, 133, 134, 135, 136, 137, 138, 139) on that scheduled bus's schedule;
predicting the average wait time of passengers at stop S to board a bus (110) travelling on the line L of bus B at the time bus B is predicted to arrive at stop S; and
identifying whether there is an unscheduled bus, U, that can arrive at stop S at an earlier time than bus B.

14. A computer-implemented method for controlling a plurality of buses (110, 120) operating as at least part of a bus network (100);
wherein the bus network (100) comprises:
one or more scheduled buses (110) operating according to respective schedules;
one or more unscheduled buses (120); and
one or more lines (130), each line (130) being formed from a plurality of sequentially connected stops (131, 132, 133, 134, 135, 136, 137, 138, 139), wherein the schedule of the or each scheduled bus (110) indicates one or more stops (131, 132, 133, 134, 135, 136, 137, 138, 139) corresponding to a section of a respective line (130);
the method comprising the steps of:
a demand prediction unit (1101) obtaining demand data pertaining to one or more of the scheduled buses (110) within the bus network (100);
the demand prediction unit (1101) predicting a number of passengers boarding and/or alighting a given scheduled bus (110) at one or more of the stops (131, 132, 133, 134, 135, 136, 137, 138, 139) on that scheduled bus's scheduled based on the demand data;
an arrival time prediction unit (1102) obtaining operating data pertaining to one or more buses (110, 120) within the bus network (100);
the arrival time prediction unit (1102) predicting the respective arrival times of a given scheduled bus (110) at one or more of the stops (131, 132, 133, 134, 135, 136, 137, 138, 139) on that scheduled bus's schedule based on the operating data; and
for a given stop, S, that a given scheduled bus, B, is scheduled to stop at:
a schedule management unit (1103) obtaining the predicted number of passengers boarding and/or alighting buses (110) at stop S;
the schedule management unit (1103) obtaining the predicted arrival time of bus B at stop S;
the schedule management unit (1103) predicting an average wait time of passengers at stop S to board a bus (110) travelling on the line L of bus B at the time bus B is predicted to arrive at stop S, based on the predicted number of passengers boarding and/or alighting buses (110) at stop S and the predicted arrival time of bus B at stop S; and
the schedule management unit (1103) identifying whether there is an unscheduled bus, U, that can arrive at stop S at an earlier time than bus B, and if so, instructing bus U to travel to stop S and assigning bus U a schedule of stops.

15. A non-transitory computer-storage medium for executing the computer implemented method of claim 14.
